# EUROPEAN PATENT SPECIFICATION

(11) **EP 2 680 532 B1**
(45) Date of publication and mention of the grant of the patent: **31.07.2019**
(21) Application number: 13174100.1
(22) Date of filing: 27.06.2013
(51) Int. Cl.: G06F 9/54, G06F 9/451, G06F 3/14, H04L 29/08, H04L 29/06

(54) **METHOD, DEVICE AND COMPUTER PROGRAM PRODUCT FOR PROVIDING ELECTRONIC TECHNICAL SUPPORT TO A USER USING A REMOTE DESKTOP**
VERFAHREN, VORRICHTUNG UND COMPUTERPROGRAMMPRODUKT ZUR BEREITSTELLUNG EINES ELEKTRONISCHEN TECHNISCHEN SUPPORTS FÜR EINEN BENUTZER, DER EINEN REMOTE-DESKTOP VERWENDET
PROCÉDÉ, DISPOSITIF ET PROGRAMME INFORMATIQUE PERMETTANT DE FOURNIR UN SUPPORT TECHNIQUE ÉLÉCTRONIQUE À UN UTILISATEUR UTILISANT UN POSTE DE TRAVAIL DISTANT

(30) Priority: 29.06.2012 EP 12305785
(43) Date of publication of application: 01.01.2014
(73) Proprietor: Orange, 75015 Paris (FR)
(72) Inventor: Eacott, Jason, Blackwood, 5051 (AU); Derham, Thomas, Tokyo, 194-0022 (JP)
(74) Representative: Cabinet Beau de Loménie

(56) References cited:
- US-A1- 2007 124 685
- US-A1- 2011 169 605

## Description

The present invention generally relates to a method for accessing and controlling a remote device, as defined in the independent claim 1. Advantageous embodiments are defined in the dependent claims. Further examples are provided for facilitating the understanding of the invention.

Various well-known technologies enable remote access to computer devices. One of these technologies, known as VNC (*Virtual Network Computing*), allows a user of a first device to access to a second remote device. A copy of the display of a second device is shown on the display of the first device, and the user of the first device can interact with the second device by making inputs on specific elements of the user interface of the first device (such as mouse/pointer button press, keyboard input, touch gestures, etc) that are communicated to the second device, which triggers commands according to these inputs. Other similar technologies include RDP (Remote Desktop Protocol) and X11 Forwarding.

Such technologies comprise two components that, while requiring mutual synchronization, can be considered essentially independently. The first component is a means by which the display of a second remote device is shown in real-time on a first device, for example using some video display encoding and transmission algorithm designed to optimize the trade-off between the quality of the display shown on the first device and the network data bandwidth required between the two devices. The second component is a means by which inputs on specific elements of the user interface of the first device are captured and communicated as control messages to the second remote device, and then the commands intended to be triggered by the captured inputs are carried out by the second remote device as if these captured inputs had been directly captured by the user interface of the second remote device itself.

There are many situations in which the user of a first local device may wish to take control of a second remote device. For example, it may be the case when the second remote device may have particularly high computing capabilities or specialized software and therefore its resources are shared between multiple users in a cost-efficient way by allowing remote access. It may be another case when a user may require to interact with a remote device in a fixed location no matter where he or she is, e.g. to interact with a remote device at work while at home or travelling. It may be a further case when the remote device may require maintenance or reconfiguration by a technician, and it is more efficient and cost effective to access the device remotely than to travel to access it locally.

Recently, compact mobile devices such as smartphones and tablets have been developed and become commercially very successful with hardware capabilities that rival those of conventional computer devices, and correspondingly their operating systems and software are becoming increasingly complex. Hence, there is a need for remote access capabilities also being available for such mobile devices. For example, a computer terminal user at the technical support call centre of a mobile operator, business or service provider may be able to remotely access the mobile devices of remote users in order to perform remote diagnosis and fix when the users of the mobile devices experience some trouble.

In particular, US2007124685 discloses a method for providing technical support by remote desktop. The agent only provides recommendations (appearing on the screen of the user) and the user keeps the full control of his computer. US2011169605 discloses an apparatus for providing remove indication over a teleconference environment. The apparatus has a remote indicator system arranged for an object to be marked, and tracked from a remote location in conjunction with a tactile glove arranged for a user in a first location to control and guide a user in a second location to operation procedures.

However, the needs of the users of mobile devices to receive remote access services are not limited to troubleshooting call centre scenarios. For example, users may wish to receive remote guidance and coaching in the use of their devices - including, for example, the operating system itself, installed applications and web browser-based services. This remote guidance could take the form of actually performing the steps needed to achieve a certain objective on behalf of the remote mobile device user, but equally it could take the form of teaching the user how to perform those steps themselves.

Given this wide range of guidance scenarios, it is clear that there is a need for such remote access services to be provided not only by technical support call centre staff, but also by the users' friends, family, members of other social groups or other third-parties. For example, in order to avoid possible support fees, increase convenience and peace-of-mind, users may often prefer to seek guidance from a member of their own peer group rather than from an unknown professional.

Such peer group guidance would also allow for collaborative experiences between users and their guiders - for example jointly browsing items using an e-commerce application on the remote device, or co-browsing a web site using a browser application on the remote device - where both user and remote guider can simultaneously see the same view of the application, while the guider assists the user to navigate the application.

However, no matter whether guidance is provided by a call centre or a member of the user's peer group, and despite the fact that the user may basically trust the person guiding them, many users may still feel uncomfortable about that person having complete control over their device, in case the remote guider (accidently or maliciously) is able to view or obtain private or confidential information available from the device (such as reading personal emails, bank account details, etc). Further, they may feel uncomfortable about the potential risk of being defrauded by a malicious actor posing as someone they trust, or some other potential vector by which unauthorized remote access by a third-party to the mobile device could be obtained.

Therefore, there is a strong need for technologies to solve these issues.

It is then an objective of the present invention to overcome disadvantages and/or make improvements in the prior art.

In that respect, the present invention relates to a method of communication, defined in the independent claim 1, between a first device and a second device, the second device comprising a user interface with a display, the method comprising the following steps executed by the second device:
- exchanging one or more messages with the first device in order to establish a communication session with the first device,
- on completion of the message exchange, establishment of a communication session in guidance mode, whereby the user of the first device will provide remote guidance to the user of the second device,
while in the guidance mode,
- receiving, from the first device, a message comprising at least one parameter representing each of at least one input at a specific element of the user interface of the first device, where each input is intended to be applied to a specific element of the user interface of the second device in order to cause, as a result of the inputs, a command to be triggered on the second device,
- determining, from the parameters in the received message, each input at a specific element of the user interface represented by the parameters,
- identifying, from the inputs at specific elements of the user interface represented in the message, an action by the user of the first device that caused the inputs on specific elements of the user interface to occur
- making an output that guides the user of the second device in the action to make the same inputs on specific elements of the user interface of the second device, and thus trigger the intended command on the second device;
- detecting an input on a specific element of the user interface of the second device,
- calculating a value representing an error between the received parameter representing an input on a specific element of a user interface intended to be detected by the second device and a parameter representing the above detected input on a specific element of the user interface of the second device,
- comparing the value representing the error with a predetermined threshold,
- blocking the corresponding input from being passed to the operating system if and only if the value representing the error is above the predetermined threshold, and hence preventing an incorrect command from being triggered,
- when the value representing the error is below the predetermined threshold, triggering a functioning mode associated to the detected input.

Such a method of communication allows a user of the first device to guide a user of the second device to trigger a specific command on their device, without actually requiring direct control of the second device.

When in the guidance mode, the display of the first device is showing a remote view of the display of the second device. The first device detects inputs on specific elements of the user interface of the first device, for example a touch input on a certain part of a touch screen, and at least one parameter representing each input on a specific element of the user interface is sent in a message to the second device.

Then, since the second device is in the guidance mode, and in contrast to prior-art technologies such as VNC, the second device does not inject the inputs on specific elements of the user interface determined from the parameters in the received message directly into its operating system (and hence, does not permit for the second device to be directly controlled by the first device). Instead, the second device identifies from the determined inputs on specific elements of the user interface an action (for example, a pinching action made with two fingers over certain parts of a touch screen) made by the user of the first device that caused the inputs on specific elements of the user interface to occur, and then makes an output (for example, a graphical animation, overlaid on the display in a position corresponding to where the inputs were made, of a computer-generated hand making the same action). This output guides the user of the second device to make the same action themselves, thus cause the corresponding inputs on specific elements of the user interface of the second device to occur, which therefore triggers the specific command on the second device that was intended by the user of the first device. In this way, a remote guidance service can be provided to the user of the second device, where only the user of the second device is able to make inputs that trigger commands on their device, and hence solving the issues described above. It will be understood hat step 4 above could alternatively be performed by the first device rather than the second device, if the first device were to be informed of the means by which the second device identifies a given gesture from certain parameters. In this case, the messages sent from the first device to the second device would allow the identified gestures to be determined and graphically represented by the second device. Such a method may be preferred where, for example, the processing capabilities of the first device are greater than those of the second device.
It will also be understood by those normally skilled in the art that step 4 could be omitted altogether, and subsequently step 5 modified so that the second device displays a graphical representation of the input based on the parameters in the received message (rather than of the gesture identified from those inputs). For example, in the case that the guiding user of the first device makes input to a touch-screen, the graphical representation could take the form of a real-time pressure map overlaying the display of the second device. The guiding user of the first device may also be able to control the display of this graphical animation so that, for example, the animated pressure map sequence corresponding to the intended gesture may be repeated several times, or removed from view once shown. While such raw graphical representation of the inputs from the guiding user of the first device may offer less intuitive guidance from the point of view of the user of the second device, it may be preferred where, for example, the processing capability of both devices is low or a reduced-complexity implementation is desired, since the relatively complex step of identifying a gesture and creating a suitable graphical representation can be omitted.

The electronic device of the user may be, for example, a mobile phone, a smartphone, a tablet, a laptop, an e-reader, etc. The first and second devices comprise a display, and one or more means of physical input such as a keyboard or pointer (e.g. mouse). In some embodiments of the invention, the display and the means of physical input may be one and the same, as is the case for the example of touch-screens.

Thus, a specific element of the user interface can be a particular point or area on the display, which may correspond to specific graphical components on the display such as a text box or button, a particular key on a keyboard or pointer, etc.

An input can be a press of a key or combination of keys on a keyboard, the press down or release of a button on the pointer, a press or other contact with a specific area of a touch-screen, activation of other input means of physical input such as accelerometer, microphone, gyroscope that form part of the device, etc.

A gesture can be one or more inputs that collectively are identified by software (operating system and/or an application) on a device as representing a specific command from a user, e.g. a swipe over an area of the screen that constitutes a command to scroll a view shown on the display, unlock the device etc. Other examples of such gestures include keystrokes, pointer button clicks, one or more simultaneous and/or consecutive presses on a touch-screen, and combinations of these with movements, giving rise to well-known commands such as clicking a user interface button, highlighting certain text, clutch or pinch touch gestures, and so on. Further, and in contrast to prior-art remote access technologies such as VNC, a gesture may also be one or more specified inputs by the guiding user of the first device that collectively are identified by the second device as representing any specified action that the user of the second device should take in order to achieve a particular objective in use of that device. For example, one or more inputs by the guiding user of the first device may be specified to represent a gesture to rotate the device by 90 degrees or depress one a special hardware button.

The method of displaying graphical representation of gestures on the display of the device, and the exact form of these graphical representations, is not material to the current invention. However, for the avoidance of any doubt, one exemplary method for a touch-screen device may involve first the determination of the physical movements of the user's hands that would be required to make the gesture with their device, second the creation of an artificial Computer Graphics animation of these movements observed from the approximate viewpoint of the user's eyes over the scope of the observed display, and third overlaying this animation on the device's display by, for example, blitting the non-transparent parts of this animated graphic completely or partially (e.g. with partial transparency) over the display frame-buffer of the device. In, for example, the case of non-touch-screen devices, or the latter type of gestures described above where the action is not an input to the display (e.g. to rotate the whole device by 90 degrees), other types of animation or graphical notifications may be displayed on the screen which are intuitive to guide the user as to what action to take.

In the above method, there are no special consequences from whatever gestures the user of the second device may take. For example, if the user of the second device makes an incorrect gesture (i.e. that does not correspond to the animated gesture), the corresponding incorrect commands will still be executed by the second device, and the guiding user of the first device may have to make further gestures in order to (if possible) undo the previous incorrect gesture, which in some cases may be undesirable. Therefore, according to a characteristic of the invention, the method of communication further comprises, while in guidance mode, the steps of:
- detecting an input on a specific element of the user interface of the second device,
- calculating a value representing an error between the received parameter representing an input on a specific element of a user interface intended to be detected by the second device and a parameter representing the above detected input on a specific element of the user interface of the second device,
- comparing the value representing the error with a predetermined threshold,
- blocking the corresponding input from being passed to the operating system if and only if the value representing the error is above the predetermined threshold, and hence preventing an incorrect command from being triggered

In this way, gestures by the user of the second device that are not adequately similar to the intended gesture by the guiding user of the first device may be blocked and hence unintended commands will not be executed by the second device. The error threshold is necessary because in practice, due to the high resolution of typical displays and input sensors, it is very difficult for the user of the second device to make inputs with parameters that precisely match those made by the guiding user of the first device, and generally unnecessary since the same commands will be executed if they are adequately similar.

Note that there is no compulsion on the user of the second device to make any gesture at all, and normally they would be able to terminate the guidance session at any time, so the benefits of avoiding full remote control of the second device are preserved while the guidance session may be more efficient since the chance of incorrect gestures being made is reduced. In addition, the user of the second device may also have the chance to efficiently practice making a gesture several times, without the risk of making a mistake while they are learning.

In the above methods, while the user of the first device may be able to deduce whether or not the gestures being made by the user of the second device are correct or not by observing if the corresponding commands are carried out through remote observation of the display (possibly in combination with voice discussion in a simultaneous phone call), in some cases the user of the first device may have difficulty to make the correct gestures and it may be difficult for the user of the first device to know what the user is doing wrong and how to correct him/her. Therefore, according to another characteristic of the invention, the method of communication comprises, following the establishment of a session in step (2), and concurrent with the steps carried out while in guidance mode, the steps of:
- The first device receiving, from the second device, a message comprising at least one parameter representing an input at a specific element of the second device's user interface,
- The first device displaying a graphical representation of this input based on the parameters in the received message

In this way, the first device may determine, for example, when, where (and possibly with how much pressure) the user of the second device is touching their display, or make other inputs such as pressing a key on the keyboard or pointer, and then to graphically represent these inputs on the first device. For example, in the case of input to the touch-screen, this may be displayed overlaid on the remote view shown on the first device in the form of a real-time pressure map. As such, the guiding user of the first device can thoroughly and intuitively understand the inputs that the user of the second device is making, and hence guide the user how to modify these inputs to form the correct gesture that is required.

In the above methods, while the risk of incorrect gestures being made by the user of the second device is reduced, effective guidance is conditional on the ability of the user of the second device to (at least eventually) be able to make the correct gestures. While in many cases this may be the desired behavior, in certain cases, such as when the user of the second device is physically disabled, it may be very difficult and frustrating for them to correctly make these gestures by themselves. Therefore, according to another characteristic of the invention, the method of communication comprises, after the step of displaying the graphical representation of the input on a specific element of a user interface, a step of :
- detecting another input on another specific element of the graphical user interface of the second device, the detection of this other input causing the intended inputs from the guiding user of the first device to be passed to the operating system of the second device so that the associated command is triggered.

In this way, for example, a graphical button may be overlayed at a specific element of the graphical user interface of the second device and, if the user of the device presses this button, the commands corresponding to the intended gesture from the guiding user of the first device will be carried out. Since it is much easier for the user of the second device to press a button rather than make a particularly complicated gesture, even physically disabled users could be efficiently guided.

Note that there is no compulsion on the user of the second device to make an input on this other specific element (e.g. button), and normally they would be able to terminate the guidance session at any time, so the benefits of avoiding full remote control of the second device are preserved while the guidance session may be more efficient since the necessity for the user of the second device to accurately make the intended gestures is removed.

One object of the invention concerns computer programs, in particular computer programs on or in an information medium or memory, suitable for implementing the methods of communication object of the invention. This programs can use any programming language, and be in the form of source code, binary code, or of code intermediate between source code and object code such as in a partially compiled form, or in any other desirable form for implementing the communication methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The programs according to the invention may in particular be downloaded from a network of Internet type.

The present disclosure relates to a method of communication between a first device and a second device, the first device comprising a user interface and a display controlled by the user interface, the method comprising the following steps executed by the first device :
- emitting a message for establishing a communication session with the second device,
- receiving a message of acknowledgement from the second device completing the establishment of the session, the reception of the message of acknowledgment triggering a guidance mode,
while in the guidance mode,
- receiving, from the second device, a message comprising at least one parameter representing an input on a specific element of a user interface intended to be detected by the user interface of the first device,
- identifying the input on a specific element of a user interface based on the received parameter,
- displaying a graphical representation of the input on a specific element of a user interface.

Such a method of communication allows a user of the second device to guide a user of the first device to execute a specific action on their device, such as for example zooming on a document, without taking control of the first device.

When in the guidance mode, the user interface of the second device detects an input on a specific element of the user interface, for example a pinching gesture. Since the second device is in the guidance mode, the parameter representing this input is not injected in the operating system of the second device to trigger the execution of a function but sent to the first device.

Upon reception of the parameter representing the input, the first device identifies the input based on the received parameter, i.e. the first device identifies the input as being a pinching gesture. In this case as well, the parameter representing the input is not injected in the operating system of the first device in order to trigger the execution of a function, as it is the case in the different methods of remote access of the prior art.

Once the input is identified, the first device displays a graphical representation of the input on a specific element of the user interface on the display of the first device. In this example, the first device displays an animation showing a pinching gesture on its display, so the user of the first device can see what the input intended to be detected by the user interface of the first device is.

The electronic device of the user can be for example a mobile phone, a Smartphone, a tablet, a laptop, an e-reader, etc.

The first and second devices comprise a display, and a user interface, such as a keyboard, or a keyboard and pointing means such as a mouse. In some embodiments of the invention, the display and the user interface can be one and the same, it is the case for example of touch-screens.

Thus, a specific element of the user interface can be a key of a key board, a combination of keys, a button of the pointing means, a specific area of a touch-screen, etc.

An input can be a keystroke or a combination of keystrokes, a combination of keystroke and an action of the pointing means, e.g. highlighting a link currently displayed using the pointing means and striking a key of the keyboard.

In the case of touch-screens, an input can be a specific gesture on a specific area of the screen, such as a clutch gesture or a pinch gesture, etc.

According to another characteristic of the invention, the method of communication further comprises, while in guidance mode, the steps of :
- detecting an input on a specific element of the user interface of the first device,
- calculating a value representing an error between the received parameter representing an input on a specific element of a user interface intended to be detected and a parameter representing the detected input on a specific element of the user interface of the first device,
- comparing the value representing the error with a predetermined threshold,
- when the value representing the error is below the predetermined threshold, triggering a functioning mode associated to the detected input.

Due to the differences between the second device and the first device, for example the two devices can have two different screen resolution, it is difficult for the user of the first device to match the input on a specific element intended to be detected. Then, it result in the first device detecting an input on a specific element of the user interface of the first device close to the input intended to be detected.

It is then interesting to determine whether the input detected on a specific element of the user interface of the first device is close enough to the input intended for the parameter representing the detected input to be injected in the operating system of the first device in order to trigger the execution of a function.

Such a method allows the user of the first device to learn some gestures with the help of the user of the user of the second device without taking the risk of making a mistake.

According to another characteristic of the invention, the method of communication comprises, after the step of displaying the graphical representation of the input on a specific element of a user interface, a step of :
- detecting another input on another specific element of the graphical user interface of the first device, the detection of the other input triggering a functioning mode associated to the detected input.

In this embodiment the user of the first device is not capable to reproduce the input on a specific element of the user interface intended to be detected. In order to trigger the execution of the function associated with the input intended to be detected, the user of the first device can touch a specific button instead of executing the gesture.

The disclosure concerns another method of communication between a first device and a second device, the first device comprising a user interface and a display controlled by the user interface, the method comprising the following steps executed by the first device :
- receiving a message for establishing a communication session with the second device,
- transmitting a message of acknowledgement to the second device completing the establishment of the session, the emission of the message of acknowledgment triggering a guidance mode,
while in the guidance mode,
- detecting an input on a specific element of the graphical user interface of the first device,
- transmitting, to the second device, a message comprising at least a first parameter representing the detected input, said detected input being intended to be detected by a user interface of the second device;
- receiving, from the second device, a message comprising at least a second parameter representing an input on a specific element of a user interface detected by the user interface of the first device,
- displaying a graphical representation of the input on a specific element of a user interface detected by the user interface of the first device and the input on a specific element of a user interface detected by the user interface of the second device.

Such a method of communication allows a user of the first device to guide a user of the second device to execute a specific action on their device, such as for example zooming on a document, without taking control of the second device.

When in the guidance mode, the user interface of the first device detects an input on a specific element of the user interface, for example a pinching gesture. Since the first device is in the guidance mode, the parameter representing this input is not injected in the operating system of the first device to trigger the execution of a function but sent to the second device.

Upon reception of a parameter representing the input on a specific element of the user interface of the second device, the first device displays a graphical representation of the input on a specific element of the user interface detected by the first device and the input on a specific element of a user interface detected by the second device on the display of the first device. This allows the user of the first device to visualize the gesture executed by the user of the second device and to compare this gesture with the one they executed on the user interface of the first device.

The present system and method are explained in further detail, and by way of example, with reference to the accompanying drawings wherein:
FIG. 1 represents a system comprising at least two devices capable of executing the methods of the invention,
FIG. 2A represents the steps of a method of communication as experienced by the user of the second device,
FIG. 2B represents the steps of a method of communication as experienced by the user of the first device.
FIG. 3 represents a diagram representing the steps of the method of communication.

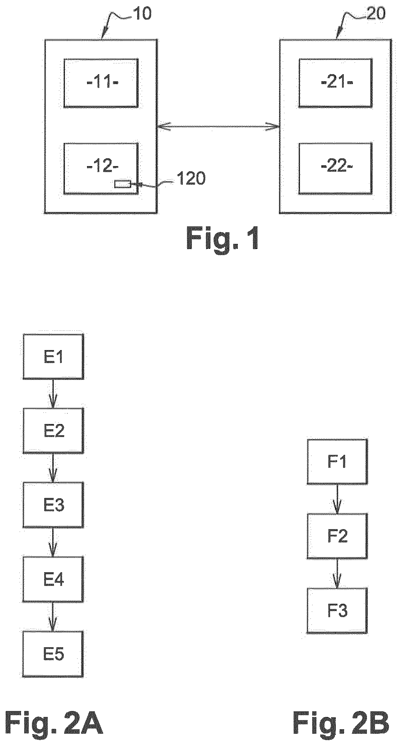

**Figure 1** represents a system comprising at least two devices 10 and 20 capable of executing the methods of the invention. The first device 10 comprises a display 11 and one or more means of physical input 12, which together form the device's user interface. The second device 20 comprises a display 21 and one or more means of physical input 22, which likewise together form the device's user interface.

In an embodiment, the display 11, 21, and means of input 12, 22 are distinct from each other. The means of input 12, 22 may be, for example, a keyboard, or a keyboard and pointing means such as a mouse. Thus, a specific element of the user interface 12, 22 may be a particular point or area of the display, a particular key on a keyboard or pointer, etc.

In another embodiment, the devices 10, 20 respectively comprise a user interface 11, 21, such as a touch-screen, acting both as a display and a means of physical input.

The first device 10 and the second device 20 are for example a smartphone, a tablet, a laptop, etc. The first device 10 and the second device 20 can communicate with each other using different of communication techniques both wired and wireless, depending on the nature of the device, such as: through optical fibers, xDSL or PLT techniques, Wi-Fi (*Wireless Fidelity*), WiMAX (*Worldwide Interoperability for Microwave Access*), Bluetooth, NFC (*Near Field Communication*), radio communication techniques, e.g. 3G, 4G, LTE, etc.

**Figure 2A** represents the steps of a method of communication as experienced by the user of the second device 20. With reference to figure 2A, the user of the second device 20 needs guidance in the use of device 20.

In a step E1, the user of the second device 20, for example a smartphone comprising a user interface 11, touches a specific element of the graphical user interface 21 in order to launch a service to request guidance.

In a step E2, the user of the second device 20 selects, for example in a contact list of device 20, a user of the first device 10 to guide them in the use of the second device 20. The first device 10 and the second device 20 can be of different natures. For example, the first device 10 may be a tablet while the second device 20 is a smartphone.

During a step E3, the user of the second device 20 may explain their need to the user of the first device 10. This is made possible by the establishment of a communication session between the first device 10 and the second device 20. The communication can be a phone call, a video conference call or an instant messaging session, for example.

In this example, the second user wants to zoom out an electronic content displayed on the graphical user interface 21 of the second device 20, but is unable to do so by themselves.

In a step E4, the second device 20 displays a graphical animation of a pinching gesture, which has been physically made by the user of the first device 10 on the graphical user interface 11. The electronic content currently displayed and graphical animation of the pinching gesture may be superimposed on the graphical user interface of the second device 20 allowing the user of the second device 20 to see both the electronic content and animation of the intended gesture simultaneously.

In a step E5, the user of the second device 20 executes on the graphical user interface 21 of the device 20 the pinching gesture displayed during step E4.

**Figure 2B** represents the steps of a method of communication as experienced by the user of the first device 10.

In a step F1, the user of the first device accepts the establishment of the communication session triggered by the second device 20 during step E3.

During a step F2, after getting an explanation from the user of the second device 20 about their need, the user of the first device execute a gesture, for example a pinching gesture, on the graphical user interface 11 of the first device 10, on which they can see a remote view of the display of the second device 20. The first device 10 detects one or more inputs corresponding to this gesture at specific elements of the graphical user interface 11, and sends one or more parameters representing these inputs as a message to the second device 20 so that a graphical animation of the corresponding gesture can be displayed on the graphical user interface 21 of the second device 20 during step E4.

In a step F3, the first device 10 displays a remote view of the display of the second device 20 including the superimposed graphical animation of the gesture, so that the user of the first device 10 can confirm this visual prompt to the user of the second device 20 has been made.

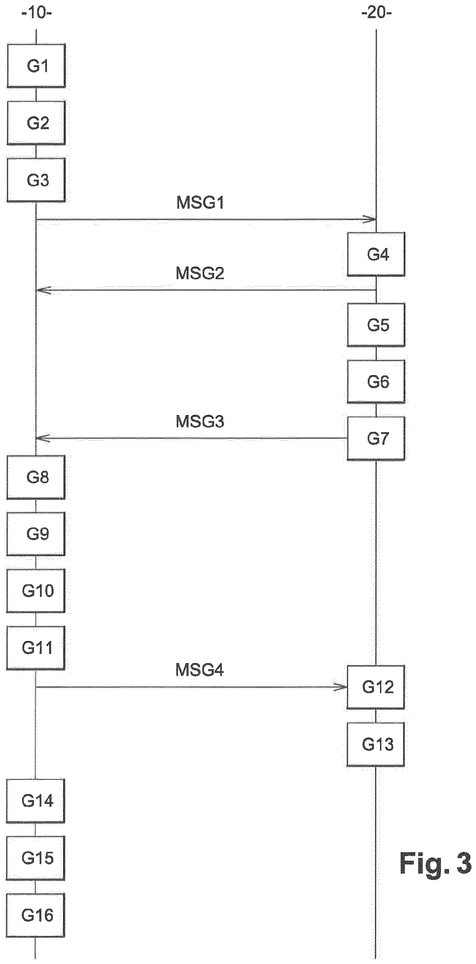

**Figure 3** shows a diagram representing the steps of the method of communication as it is carried out between the first device 10 and the second device 20.

In a step G1, the second device 20 detects an input on a specific element of the graphical user interface 21 which signifies the setup of a specific functioning mode called guidance mode.

In a step G2, the second device 20 enters this guidance mode.

During a step G3, the second device 20 emits a message MSG1 for establishing a communication session with the first device 10. A previous communication session can already be established between the first device 10 and the second device 20, such as a phone call.

In a step G4, the first device 10 receives the message MSG1. The reception of the message triggers the guidance mode on the first device 10.

In a step G5, handshaking messages may be exchanged in order to authenticate and secure the session, at end of which the first device 10 sends a message of acknowledgement MSG2 to the second device 20 completing the establishment of the session. After the execution of step G5, the first device 10 and the second device 20 are both in the guidance mode. The session established between the first device 10 and the second device 20 while the two devices are in the guidance mode enables the exchange of control messages between the first device 10 and the second device 20, as well as the transmission of data from the second device 20 to the first device 10 such that a remote view of the display of the second device 20 may be viewed on the display of the first device 10.

In a step G6, the first device 10 detects one or more inputs on a specific element of the graphical user interface 11 of the first device 10. The inputs together form, for example a pinching gesture. A parameter representing an input on a specific element of the user interface comprises the information necessary to determine the nature of the input. Such information may be for example the coordinates of the pixel of the graphical user interface where the input starts, the coordinates of the pixel where the input stops, an identifier of a key or a combination of keys, a type of mouse click, the duration or pressure of a touch on a touch-screen, etc.

In a step G7, the first device 10 sends a control message MSG3 comprising the parameters representing the input on a specific element of the graphical user interface 11 of the first device detected during step G6.

In a step G8, the second device 20 receives the control message MSG3.

In a step G9, the second device 20 determines, from the parameters in control message MSG3, the inputs intended to be detected by the second device 20. Using these inputs, the second device 20 identifies the gesture to be a pinching gesture.

In a step G10, the second device 20 displays a graphical representation of this gesture on the graphical user interface 21 of the second device 20. Here, the second device 20 displays an animation showing a pinching gesture on its graphical user interface 21.

In a step G11, the user of the second device 20 attempts to make a gesture on the graphical user interface 21 of the second device 20 that corresponds to the graphical representation of the gesture shown in step G10. Normally, the second device 20 will carry out commands that correspond to gestures made by the user of the second device 20.

In a step G12, which occurs in a particular embodiment of the invention, the second device 20 calculates a value representing an error between the parameter representing the input detected by the first device 10 and comprised in the control message MSG3 and the parameter representing the input to the second device in step G11.

In a step G13, which occurs in the same characteristic of the invention as G11, the second device 20 compares the value representing the error with a predetermined threshold. If and only if the value representing the error is below the predetermined threshold, then, the second device 20 will carry out commands that correspond to the gesture. Otherwise, the inputs are blocked and no command is carried out. The calculation of the error and the comparison of this error with the predetermined threshold enables to determine whether the input detected by the second device 20 is adequately similar to the input executed by the user of the first device 10 and displayed on the graphical user interface 21 of the second device 20.

In a step G11', which occurs in another particular characteristic of the invention and together with step G11, the first device 10 receives from the second device 20 a message comprising at least one parameter representing an input arising from the attempt of the user of the second device 20 to make the gesture on the graphical user interface 21 in step G11.

In a step G14, which occurs in the same characteristic of the invention as step G11', the first device displays a graphical representation of the input made by the user of the second device 20 based on the parameters in the received message sent in step G11'. Hence, the user of the first device 10 is able to know the inputs made by the user of the second device 20 and hence guide how to modify those inputs if the resulting gesture is not correct.
In a step G11", which occurs in another particular characteristic of the invention in place of step G11, the user of the second device 20 makes an input on a specified element of the graphical user interface 21 of the second device 20, as a result of which the inputs corresponding to the gesture made by the user of the first device 10 are passed to the operating system of the second device 20 so that the associated command is triggered. Hence, the user of the second device 20 is able to cause the command associated with the gesture to be executed by the second device 20 without having to make the gesture themselves.

**Figure 1** represents a system comprising at least two devices 10 and 20 capable of executing the methods of this disclosure. The first device 10 comprises a display 11 and a user interface 12 controlling the display 11. The second device 20 comprises a display 21 and a user interface 22 controlling the display 21 as well.

In an embodiment, the display 11, 21, and a user interface 12, 22 are distinct from each other. The user interface 12, 22 can be a keyboard, or a keyboard and pointing means such as a mouse. Thus, a specific element of the user interface 12, 22 can be a key of a key board, a combination of keys, a button of the pointing means, a specific area of a touch-screen, etc.

In another embodiment, the devices 10, 20 respectively comprise a graphical user interface 11, 21, such as a touch-screen, acting both as a display and a user interface controlling the display.

The first device 10 and the second device 20 are for example a Smartphone, a tablet, a laptop, etc. The first device 10 and the second device 20 can communicate with each other using different of communication techniques both wired and wireless, depending on the nature of the device, such as : through optical fibers, xDSL or PLT techniques, WiFi (*Wireless Fidelity*), WiMAX (*Worldwide Interoperability for Microwave Access*), Bluetooth, NFC (*Near Field Contact*), radio communication techniques, e.g. 3G, 4G, etc.

**Figure 2A** represents the steps of a method of communication as experienced by the user of the first device 10. In reference to figure 2A, the user of the first device 10 needs assistance in the use of device 10.

In a step E1, the user of the first device 10, for example a Smartphone comprising a graphical user interface 11, touches a specific element of the graphical user interface 11 in order to launch a guidance service.

In a step E2, the user of the first device 10 selects, for example in a contact list of the first device 10, a user of a second device 20 to guide them in the use of the firs device 10. The first device 10 and the second device 20 can be of different natures. For example, the first device 10 is a Smartphone while the second device 20 is a tablet.

During a step E3, the user of the first device 10 explains their need to the user of the second device 20. This is made possible by the establishment of a communication session between the first device 10 and the second device 20. The communication can be a phone call, a video conference call or an instant messaging session, for example.

In this example, the first user wants to zoom out an electronic content displayed on the graphical user interface 11 of the first device 10.

In a step E4, the first device 10 displays a pinching gesture executed by the user of the second device 20 on the graphical user interface 21 of the second device 20. The electronic content currently displayed and pinching gesture can be superimposed on the graphical user interface of the first device 10 allowing the user of the first device 10 to see the electronic content and the gesture to be executed in order to zoom out simultaneously.

In a step E5, the user of the first device 10 execute on the graphical user interface 11 of the device 10 the pinching gesture displayed during step E4.

If the pinching gesture is executed correctly by the user of the first device 10, the zooming out action is triggered.

**Figure 2B** represents the steps of a method of communication as experienced by the user of the second device 20.

In a step F1, the user of the second device accepts the establishment of the communication session triggered by the first device 10 during step E3.

During a step F2,after getting an explanation from the user of the first device 10 about their need, the user of the second device execute a gesture, for example a pinching gesture, on the graphical user interface 21 of the second device 20. A parameter representing the gesture executed by the user of the second device 20 is not injected in the operating system of the second device 20 in order to trigger the execution of a function, i.e. zooming out. Instead, the parameter representing the gesture executed by the user of the second device 20 is transmitted to the first device 10 to be displayed on the graphical user interface 11 of the first device 10 during step E4.

In a step F3, the second device 20 displays the pinching gesture executed by the user of the first device 10 on the graphical user interface 11 of the second device 10. This allows the user of the second device 20 to if the user of the first device is correctly executing the gesture.

**Figure 3** shows a diagram representing the steps of the method of communication when it is run by the first device 10 and the second device 20.

In a step G1, the first device 10 detects an input on specific element of the graphical user interface 11. Such an input is for example a long touch on a specific area of the graphical user interface 11. In an embodiment where the display and the user interface are distinct from each other the input can be the activation of a specific key or combination of keys of a keyboard.

Upon detection of the input on a specific element of the graphical user interface 11, the first device 10 enters in a specific functioning mode called guidance mode, in a step G2.

During a step G3, the first device 10 emits a message MSG1 for establishing a communication session with the second device 20. A previous communication session can already be established between the first device 10 and the second device 20, such as a phone call.

In a step G4, the second device 20 receives the message MSG1. The reception of the message triggers the guidance mode on the second device 20.

In a step G5, the second device 20 sends a message of acknowledgement MSG2 to the first device 10 completing the establishment of the session. After the execution of step G5, the first device 10 and the second device 20 are both in the guidance mode. The session established between the first device 10 and the second device 20 while the two devices are in the guidance mode enables the exchange of control messages between the first device 10 and the second device 20.

In a step G6, the second device 20 detects an input on a specific element of the graphical user interface 21 of the second device 20. The input is for example a pinching gesture. Since the second device 20 is in the guidance mode, a parameter representing the input on a specific element of the graphical user interface 21 of the second device 20 is not injected in the operating system of the second device 20 in order to trigger the execution of a function associated with the detected input.

A parameter representing an input on a specific element of a use interface is comprises the information necessary to determine the nature of the input. Such information are for example the coordinates of the pixel of the user interface where the input starts, the coordinates of the pixel where the input stops, an identifier of a key or a combination of keys, a type of mouse click, the duration of a touch on a touch-screen, etc.

In a step G7, the second device 20 sends a control message MSG3 comprising the parameter representing the input on a specific element of the graphical user interface 21 of the second device detected during step G6.

In a step G8, the first device 10 receives the control message MSG3. In a step G9, the first device 10 identifies the input intended to be executed by the user of the first device 10 based on the received parameter. Using the information comprised in the received parameter, the first device 10 identifies the input as being a pinching gesture. In this case as well, the parameter representing the input is not injected in the operating system of the first device10 in order to trigger the execution of the function associated with the input.

In a step G10, the first device 10 displays a graphical representation of the input intended to be executed by the user of the first device 10 on the graphical user interface 11 of the first device 10. Here, the first device 10 displays an animation showing a pinching gesture on its graphical user interface 11.

In a step G11, the first device 10 detects an input on a specific element of the graphical user interface 11. A parameter representing the input on a specific element of the graphical user interface 11 of the first device 10 is sent in a control message MSG4 to the second device 20.

In a step G12, the second device 20 identifies the input detected by the first device 10 based on the parameter comprised in the control message MSG4. Using the information comprised in the parameter comprised in the control message MSG4, the second device 20 identifies the input as being a pinching gesture. In this case as well, the parameter representing the input is not injected in the operating system of the second device 20 in order to trigger the execution of the function associated with the input.

Instead, the second device 20 displays, in a step G13, a graphical representation of the input detected by the first device 10 and the input detected by the second device 20. This makes it possible for the user of the second device 20 to see if the user of the first device 10 is executing the intended gesture correctly.

In the meantime, in a step G14, the first device 10 calculates a value representing an error between the parameter representing the input detected by the second device 20 and comprised in the control message MSG3 and the parameter representing the input by the first device in the step G11.

In a step G15, the first device 10 compares the value representing the error with a predetermined threshold. If the value representing the error is below the predetermined threshold, then, the parameter representing the input by the first device in the step G11 is injected into the operating system of the first device 10 triggering the function associated to the detected input in a step G16.

The calculation of the error and the comparison of this error with the predetermined threshold enable to determine whether the input detected by the firs device 10 is adequately close to the input executed by the user of the second device 20 and displayed on the graphical user interface 11 of the first device 10 in order to trigger the associated function on the first device 10.

In an embodiment of this method, after the first device 10 displays a graphical representation of the input intended to be executed by the user of the first device 10 on the graphical user interface 11 of the first device 10 during step G10, the first device 10 detects an input on another specific element of the graphical user interface 11 in a step G11', the detection of the other input triggering the function associated to the input identified during step G9. The input detected during step G11' is for example a long touch on a specific area of the graphical user interface 11 of the first device.

## Claims

1. A method of communication between a first device and a second device, the second device comprising a user interface with a display, the method comprising the following steps executed by the second device:
- exchanging one or more messages with the first device in order to establish a communication session with the first device,
- on completion of the message exchange, establishment of a communication session in guidance mode, whereby the user of the first device will provide remote guidance to the user of the second device,
while in the guidance mode,
- receiving, from the first device, a message comprising at least one parameter representing each of at least one input at a specific element of the user interface of the first device, where each input is intended to be applied to a specific element of the user interface of the second device in order to cause, as a result of the inputs, a command to be triggered on the second device,
- determining, from the parameters in the received message, each input at a specific element of the user interface represented by the parameters,
- identifying, from the inputs at specific elements of the user interface represented in the message, an action by the user of the first device that caused the inputs on specific elements of the user interface to occur,
- making an output that guides the user of the second device in the action to make the same inputs on specific elements of the user interface of the second device, and thus trigger the intended command on the second
- detecting an input on a specific element of the user interface of the second device,
the method of communication being **characterized in that** it further comprises while in guidance mode, the steps of:
- calculating a value representing an error between the received parameter representing an input on a specific element of a user interface intended to be detected by the second device and a parameter representing the above detected input on a specific element of the user interface of the second device,
- comparing the value representing the error with a predetermined threshold,
- blocking the corresponding input from being passed to the operating system if and only if the value representing the error is above the predetermined threshold, and hence preventing an incorrect command from being triggered,
- when the value representing the error is below the predetermined threshold, triggering a functioning mode associated to the detected input.

2. The method of communication according to claim 1 comprising, following the establishment of a session in step (2), and concurrent with the steps carried out while in guidance mode, the steps of:
- The first device receiving, from the second device, a message comprising at least one parameter representing an input at a specific element of the second device's user interface,
- The first device displaying a graphical representation of this input based on the parameters in the received message

3. The method of communication according to claim 1 comprising, after the step of displaying the graphical representation of the input on a specific element of a user interface, a step of:
- detecting another input on another specific element of the graphical user interface of the second device, the detection of this other input causing the intended inputs from the guiding user of the first device to be passed to the operating system of the second device so that the associated command is triggered, or triggering a functioning mode associated to the detected input.

4. A device capable of communicating with another device, the device comprising a user interface with a display, and means for implementing the method of Claim 1.

5. A computer program **characterized in that** it comprises program code instructions for the implementation of the steps of the method of communication as claimed in claim 1 when the program is executed by a processor.

## Patentansprüche

1. Kommunikationsverfahren zwischen einer ersten Vorrichtung und einer zweiten Vorrichtung, wobei die zweite Vorrichtung eine Benutzerschnittstelle mit einem Display umfasst, wobei das Verfahren die folgenden Schritte umfasst, die von der zweiten Vorrichtung ausgeführt werden:
- Austauschen von einer oder mehreren Nachrichten mit der ersten Vorrichtung, um eine Kommunikationssitzung mit der ersten Vorrichtung herzustellen,
- nach Abschluss des Nachrichtenaustausches Herstellung einer Kommunikationssitzung im Führungsmodus, wodurch der Benutzer der ersten Vorrichtung dem Benutzer der zweiten Vorrichtung eine Fernführung bereitstellt,
im Führungsmodus
- Empfangen einer Nachricht, die mindestens einen Parameter umfasst, der jede von mindestens einer Eingabe an einem spezifischen Element der Benutzerschnittstelle der ersten Vorrichtung repräsentiert, von der ersten Vorrichtung, wo jede Eingabe auf ein spezifisches Element der Benutzerschnittstelle der zweiten Vorrichtung angewendet werden soll, um als ein Ergebnis der Eingaben zu bewirken, dass an der zweiten Vorrichtung ein Befehl ausgelöst wird,
- Bestimmen jeder Eingabe an einem spezifischen Element der Benutzerschnittstelle, die durch die Parameter repräsentiert ist, anhand der Parameter in der empfangenen Nachricht,
- Identifizieren einer Aktion durch den Benutzer der ersten Vorrichtung, die bewirkte, dass die Eingaben an spezifischen Elementen der Benutzerschnittstelle erfolgten, anhand der Eingaben an spezifischen Elementen der Benutzerschnittstelle, die in der Nachricht repräsentiert sind,
- Erstellen einer Ausgabe, die den Benutzer der zweiten Vorrichtung in der Aktion führt, um dieselben Eingaben an spezifischen Elementen der Benutzerschnittstelle der zweiten Vorrichtung vorzunehmen und so den beabsichtigten Befehl an der zweiten auszulösen
- Detektieren einer Eingabe an einem spezifischen Element der Benutzerschnittstelle der zweiten Vorrichtung,
wobei das Kommunikationsverfahren **dadurch gekennzeichnet ist, dass** es im Führungsmodus ferner die folgenden Schritte umfasst:
- Berechnen eines Wertes, der einen Fehler zwischen dem empfangenen Parameter, der eine Eingabe an einem spezifischen Element einer Benutzerschnittstelle, die von der zweiten Vorrichtung detektiert werden soll, repräsentiert, und einem Parameter, der die obige detektierte Eingabe an einem spezifischen Element der Benutzerschnittstelle der zweiten Vorrichtung repräsentiert, repräsentiert,
- Vergleichen des Wertes, der den Fehler repräsentiert, mit einem vorbestimmten Schwellwert,
- Verhindern, dass die entsprechende Eingabe zum Betriebssystem geleitet wird, wenn und nur wenn der Wert, der den Fehler repräsentiert, über dem vorbestimmten Schwellwert liegt, und somit Unterbinden, dass ein falscher Befehl ausgelöst wird,
- wenn der Wert, der den Fehler repräsentiert, unter dem vorbestimmten Schwellwert liegt, Auslösen eines Funktionsmodus, der mit der detektierten Eingabe verknüpft ist.

2. Kommunikationsverfahren nach Anspruch 1, das nach der Herstellung einer Sitzung in Schritt (2) und gleichzeitig mit den Schritten, die im Führungsmodus ausgeführt werden, die folgenden Schritte umfasst:
- Empfangen einer Nachricht, die mindestens einen Parameter umfasst, der eine Eingabe an einem spezifischen Element der Benutzerschnittstelle der zweiten Vorrichtung repräsentiert, an der ersten Vorrichtung von der zweiten Vorrichtung,
- Anzeigen einer grafischen Repräsentation dieser Eingabe auf Basis der Parameter in der empfangenen Nachricht an der ersten Vorrichtung

3. Kommunikationsverfahren nach Anspruch 1, das nach dem Schritt des Anzeigens der grafischen Repräsentation der Eingabe an einem spezifischen Element einer Benutzerschnittstelle folgenden Schritt umfasst:
- Detektieren einer anderen Eingabe an einem anderen spezifischen Element der grafischen Benutzerschnittstelle der zweiten Vorrichtung, wobei die Detektion dieser anderen Eingabe bewirkt, dass die beabsichtigten Eingaben des führenden Benutzers der ersten Vorrichtung zum Betriebssystem der zweiten Vorrichtung geleitet werden, derart, dass der verknüpfte Befehl ausgelöst wird, oder Auslösen eines Funktionsmodus, der mit der detektierten Eingabe verknüpft ist.

4. Vorrichtung, die in der Lage ist, mit einer anderen Vorrichtung zu kommunizieren, wobei die Vorrichtung eine Benutzerschnittstelle mit einem Display sowie einem Mittel zum Implementieren des Verfahrens nach Anspruch 1 umfasst.

5. Computerprogramm, das **dadurch gekennzeichnet ist, dass** es Programmcodeanweisungen für die Implementierung der Schritte des Kommunikationsverfahren wie in Anspruch 1 beansprucht, wenn das Programm von einem Prozessor ausgeführt wird, umfasst.

## Revendications

1. Procédé de communication entre un premier dispositif et un deuxième dispositif, le deuxième dispositif comprenant une interface utilisateur dotée d'un affichage, le procédé comprenant les étapes suivantes exécutées par le deuxième dispositif :
- l'échange d'un ou de plusieurs messages avec le premier dispositif dans le but d'établir une session de communication avec le premier dispositif,
- à l'issue de l'échange de messages, l'établissement d'une session de communication en mode de guidage, moyennant quoi l'utilisateur du premier dispositif offrira un guidage à distance à l'utilisateur du deuxième dispositif,
en mode de guidage,
- la réception, depuis le premier dispositif, d'un message comprenant au moins un paramètre représentant chacune d'au moins une entrée au niveau d'un élément spécifique de l'interface utilisateur du premier dispositif, chaque entrée étant destinée à être appliquée à un élément spécifique de l'interface utilisateur du deuxième dispositif dans le but de provoquer, en conséquence des entrées, le déclenchement d'une commande sur le deuxième dispositif,
- la détermination, à partir des paramètres dans le message reçu, de chaque entrée au niveau d'un élément spécifique de l'interface utilisateur représenté par les paramètres,
- l'identification, à partir des entrées au niveau d'éléments spécifiques de l'interface utilisateur représentés dans le message, d'une action par l'utilisateur du premier dispositif qui a provoqué la survenue des entrées sur des éléments spécifiques de l'interface utilisateur,
- la génération d'une sortie qui guide l'utilisateur du deuxième dispositif dans l'action pour réaliser les mêmes entrées sur des éléments spécifiques de l'interface utilisateur du deuxième dispositif, et déclencher ainsi la commande voulue sur le deuxième,
- la détection d'une entrée sur un élément spécifique de l'interface utilisateur du deuxième dispositif,
le procédé de communication étant **caractérisé en ce qu'**il comprend en outre, en mode de guidage, les étapes suivantes :
- le calcul d'une valeur représentant une erreur entre le paramètre reçu représentant une entrée sur un élément spécifique d'une interface utilisateur destinée à être détectée par le deuxième dispositif et un paramètre représentant l'entrée détectée susmentionnée sur un élément spécifique de l'interface utilisateur du deuxième dispositif,
- la comparaison de la valeur représentant l'erreur à un seuil prédéterminé,
- le blocage du transfert de l'entrée correspondante au système d'exploitation si et seulement si la valeur représentant l'erreur est supérieure au seuil prédéterminé, et, de ce fait, l'empêchement du déclenchement d'une commande incorrecte,
- lorsque la valeur représentant l'erreur est inférieure au seuil prédéterminé, le déclenchement d'un mode fonctionnel associé à l'entrée détectée.

2. Procédé de communication selon la revendication 1, comprenant, suite à l'établissement d'une session à l'étape (2), et simultanément aux étapes accomplies en mode de guidage, les étapes suivantes :
- la réception, par le premier dispositif, depuis le deuxième dispositif, d'un message comprenant au moins un paramètre représentant une entrée au niveau d'un élément spécifique de l'interface utilisateur du deuxième dispositif,
- l'affichage, par le premier dispositif, d'une représentation graphique de cette entrée sur la base des paramètres dans le message reçu.

3. Procédé de communication selon la revendication 1, comprenant, après l'étape d'affichage de la représentation graphique de l'entrée sur un élément spécifique d'une interface utilisateur, l'étape suivante :
- la détection d'une autre entrée sur un autre élément spécifique de l'interface utilisateur graphique du deuxième dispositif, la détection de cette autre entrée provoquant le transfert des entrées voulues émanant de l'utilisateur guide du premier dispositif vers le système d'exploitation du deuxième dispositif de façon à déclencher la commande associée, ou déclenchant un mode fonctionnel associé à l'entrée détectée.

4. Dispositif apte à communiquer avec un autre dispositif, le dispositif comprenant une interface utilisateur dotée d'un affichage et des moyens de mise en oeuvre du procédé selon la revendication 1.

5. Programme d'ordinateur, **caractérisé en ce qu'**il comprend des instructions de code de programme pour la mise en oeuvre des étapes du procédé de communication selon la revendication 1 lorsque le programme est exécuté par un processeur.
